# EUROPEAN PATENT SPECIFICATION

(11) **EP 1 359 832 B1**
(45) Date of publication and mention of the grant of the patent: **15.09.2004**
(21) Application number: 01272219.5
(22) Date of filing: 24.12.2001
(51) Int. Cl.: A47J 31/06, A47J 31/44, A47J 31/40

(54) **CHARGER FILTER HOLDER FOR ESPRESSO COFFEE MACHINES**
LADEFILTERHALTER FÜR ESPRESSO-MASCHINEN
PORTE-FILTRE CHARGEUR POUR CAFETIERES A EXPRESSO

(30) Priority: 27.12.2000 IT AN20000054
(43) Date of publication of application: 12.11.2003
(73) Proprietor: Artech S.r.l., 60034 Cupramontana (IT)
(72) Inventor: SCALONI, Gilberto, I-60040 Sasso di Serra San Quirico (IT)
(74) Representative: Gentili, Enrico
(86) International application number: PCT/IB2001/002713
(87) International publication number: WO 2002/051290

(56) References cited:
- EP-A- 0 450 200
- EP-A- 0 622 039
- EP-A- 0 948 927
- DE-U- 29 917 586
- IT-B- 1 249 124
- US-A- 2 839 988

## Description

The subject of this invention is a charger filter holder for espresso coffee machines.

In the majority of espresso coffee machines currently produced, the boiler for the water is separate from the infusion chamber. This causes the organoleptic qualities of the coffee to deteriorate if the machine is not used continually, in fact the temperature of the water for infusion decreases along the piping from the boiler to the infusion chamber and in the infusion chamber itself, since these elements cool down when the machine is not used continually.

The Patent deposited on 21.11.1985 at the UPICA in Pesaro, application number 1244, offers a solution to this drawback using a distributor of espresso coffee in which the boiler and the charger are incorporated in a single, heated unit. Consequently, the infusion chamber and the connecting pipe always remain hot.

The method given in this document, designed specifically for automatic machines, cannot easily be used on machines equipped with a manual charger, with external handle and a bayonet fitting or a similar fitting. As known, in espresso coffee machines, whether domestic or for bars, the ground coffee is placed in a charger-filter holder which is then fixed to the machine using a fitting which is generally of a bayonet type: the charger is fitted using an external handle on the charger itself and firmly locked onto the machine using a twisting movement.

Said charger acts as the infusion chamber for the ground coffee when it is flooded with the hot water.

Most of the known chargers generally have a fixed volume infusion chamber, that is they do not expand during the infusion process, when the ground coffee is saturated by the pressurised hot water. This fact causes one major drawback: the ground coffee contained in the charger is not fully utilized. It has been noted that, if said ground coffee has the opportunity to expand and move around in the charger when the hot water flows through, it is possible to obtain a stronger infusion with improved organoleptic qualities.

This matter is sufficiently considered in the Italian Patent N° 01265639 which also offers the following solution: above the infusion chamber is a sliding filter holder, pressed against said infusion chamber and therefore against the powdered coffee, by a spring; the sliding filter holder and the relative spring are fitted inside the heat exchanger which heats the water for infusion in order to keep these components hot at all times. As is fully explained in the above-mentioned document, the hot water is injected into the infusion chamber under strong pressure by a pump, causing the sliding filter to lift and therefore increasing the volume in the infusion chamber; consequently all the particles of ground coffee are free to move around and blend or, if contained in wafers or cartridges, can be easily reached by the flow of hot water allowing the full flavour to be extracted; when the water is turned off, the sliding filter holder, pushed by the relative spring, again presses down on the ground coffee, compressing and drying it and reducing it to a semi-solid block.

The invention claimed in the above-mentioned document, to which the reader is referred for functional detail not described in the present document inasmuch as they are the patrimony of the known process, was a considerable improvement on the state of the art at the time. However one drawback remains, since the block of ground coffee remaining after infusion frequently sticks to the inside of the charger and there are practical difficulties in extracting it.

A further drawback present in the above-mentioned document, as can easily be noted in the drawings enclosed with it, is that there are evident, intrinsic, constructional limits to the invention proposed, the spiral guides of the bayonet fitting must consist of channels cut into the body of the charger itself; said channels cannot be very deep, unless the charger is made exceptionally thick; nor can the channels be cut into the body of the heat-exchanger which surrounds the charger, since the heat exchanger is made of soft metal, generally aluminium. Consequently, the guides on the bayonet attachment are subject to rapid wear, above all the progressive distortion of the rectangular section of the channels, and the charger must be replaced frequently.

The European Patents N° 0948927 and N° 045200, expressly referred to espresso-type coffee vending machines, and the German Utility Model N° 29917586 also show infusion chambers that expand during the coffee preparation but no one of them teaches how to keep the chamber all the times hot simply building it very close to the water heater neither they suggest how to detach the pressed coffee powder from the infusion chamber at the end of the infusion process unless an input for the expulsion of the pressed coffee powder is given.

The first aim of the present invention is to construct an espresso coffee machine, equipped with a traditional type of fast-fitting charger provided with an external handle, which, while preserving the advantages of the previous patents, will allow the block of compressed grounds to be ejected easily after infusion.

Another aim of the present invention is to construct an espresso coffee machine in which the spiral guides of the bayonet fittings of the charger will not be subject to wear.

These and other scopes will be attained by an espresso coffee machine equipped with a manual filter holder charger with bayonet fitting having the characteristics described in this document and in the enclosed claims which are an integral part of the description.

Said characteristics will be better explained by the following description of a preferred form of the construction, which is representative and not limiting, and is illustrated in the enclosed drawings in which:
- figure 1 shows a frontal section of a ground coffee charger;

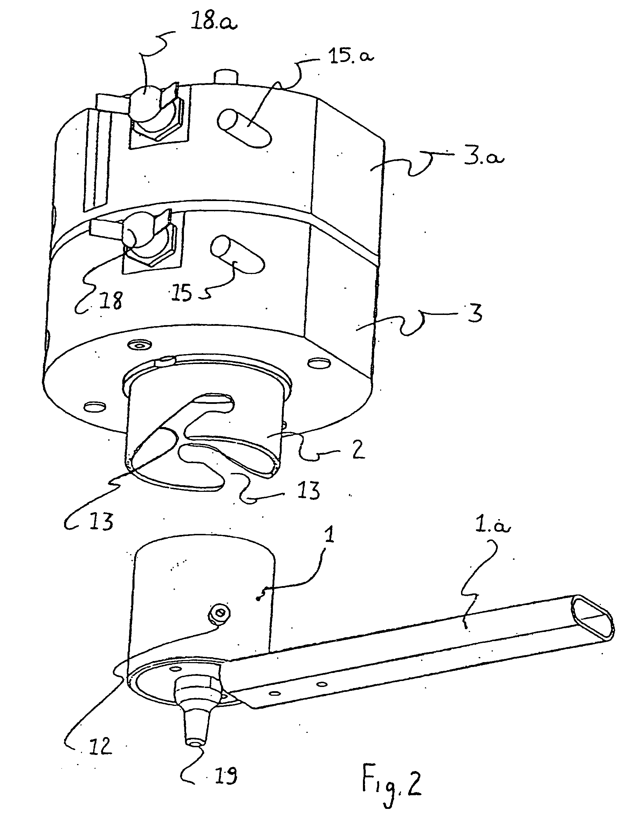

- figure 2 shows an axonometric view of the charger and the boilers for the water and the steam.

With reference to the above drawings, number 1 indicates a charger fitted with an external handle 1.a.

As shown in the drawings, said charger I can be fixed to an espresso coffee machine using a bayonet fitting consisting of a spiral guide 13 into which the pins 12 fasten; the spiral guides 13 are made from the entire thickness of a metal support sheath 2 which in turn is fitted and thermally connected to a heat- accumulator/exchanger 3 for heating the water for infusion; the pins 12 are removable, for example by unscrewing, to the charger 1 and may be made in softer material than the support sheath 2 or at least that part of the metal support sheath in which the spiral guides 13 are cut.

With 3.a is indicated a heat accumulator/exchanger for producing steam.

Both the accumulator/exchangers 3 and 3.a are in compact metal, for example aluminium; inside them are serpentines 14 and 14.a destined to carry respectively, water to be heated for infusion or to be transformed into steam and there are also serpentines 17 and 17.a consisting of electric resistances for heating the accumulator/exchangers 3 and 3.a. With 15 and 15a are indicated respectively the entrance extremities of the serpentines 14 and 14.a and with 16 and 16.a are indicated respectively the termination of the serpentines 14 and 14.a; with 18 and 18.a are indicated the electric connections of the serpentines 17 and 17.a. The construction methods of said accumulator/exchangers 3 and 3.a are a known technique.

Inside the charger 1 is a compression element 4. An elastically deformable element 5 is interposed between the compression element 4 and the base 6 of said charger 1.

In the position shown in the drawing, an infusion chamber 8 destined to contain the coffee grounds, is positioned between the compression element 4 and the upper filter holder 7.

The compression element contains a lower filter 9 while the upper filter holder 7 contains an upper filter 10.

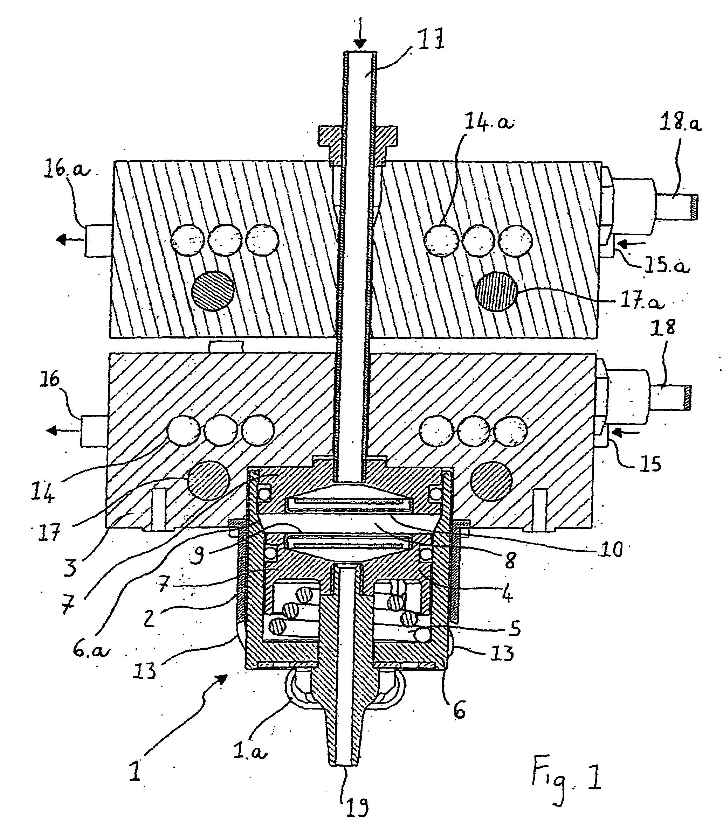

The infusion chamber is delimited by said two filters, respectively upper and lower 9 and 10, and part of the internal surface of the base 6 of said charger 1. As it is clear from fig. 1, the upper portion 6.a of said part of the internal surface of the base 6 delimiting the infusion chamber 8 can enlarge cone-shaped from the bottom to the top.

A conduit 11 for admitting hot water into the infusion chamber 8 is linked, by piping not shown in the drawings, to the terminal extremity 16 of the serpentine 14. The nozzle 19 from which the infusion issues is shown.

The functioning of the subject of the present invention is now described, with reference to the parts in the drawings.

After filling the infusion chamber 8 with ground coffee, the charger 1 is fitted into the metal support sheath 2 by means of the spiral guides 13 and the corresponding pins 12 and, by twisting the external handle 1.a, it is firmly fixed to said sheath 2.

Said fitting of the charger 1 causes the ground coffee to be compressed between the lower filter 9 and the upper filter 10 and, at the same time causes slight compression of the elastically deformable element 5.

When the charger is fully fitted, said elastically deformable element continues to exercise pressure on the coffee grounds in the infusion chamber 8.

At this point the infusion begins, by allowing the hot water for infusion to flow into the infusion chamber 8, through the conduit 11, typically at the temperature of 90°C and under very high pressure;. During the infusion process, the elasticity of the elastically deformable element 5 allows the compression element 4 to be lowered, due to the pressure of the water and the consequent increase in volume of the infusion chamber 8, which, as already stated almost in the above-mentioned Italian Patent N° 01265639, allows the optimal use of the ground coffee loaded in the charger.

As the hot water is injected, the infusion issues from the nozzle 19. When the pressurised water stops, the compression element 4, pushed by the elastically deformable element 5, presses the grounds or the wafer of coffee forming a semi-solid, compressed and almost dry block.

When infusion is concluded, it is possible to release the charger 1 from the relative spiral fitting 2 using the handle 1.a.

At this point the elastically deformable element 5 is no longer compressed and it can return to its natural extended position, releasing and partially ejecting the block of used coffee from the infusion chamber 8. This partial ejection of the used coffee block can be made easier if said upper portion 6.a delimiting the infusion chamber is cone-shaped.

Since the metal support sheath 2 is fixed and thermally connected to the heat accumulator/exchanger 3 and since the charger 1 is fitted into the metal support sheath 2, as known from said Italian Patent N° 01265639, the infusion chamber 8 is held at a temperature substantially equal to the ideal temperature for infusion, guaranteeing the organoleptic qualities of the resulting infusion.

Since the spiral guides 13 are cut into the entire depth of the metal support sheath 2, they are subject to less wear than those made according to the technique known from said Italian Patent N° 01265639 and in any case the wear on the edges of said guides does not substantially change the profile, guaranteeing a good seal for a reasonably long time; also, if as already stated the pins 12, arranged as known almost from the patent US 2 839 988, are moreover made of softer material than the metal support sheath 2, the latter being easily and economically replaceable, they can be sacrificed acting as protection against the wear of the spiral guides 13. Also, at least for machines destined for heavy use, such as those in public places, it would be possible to sell pins 12 of various diameters (obviously this means variations of tenths and hundredths of mm) in order to compensate, by replacing the pins 12 for the slight wear on the edges of the spiral guides 13, recovering the backlash which has formed over time.

The first advantage offered by the subject of the present invention is the ease of ejection of the blocks of ground coffee which are automatically removed from the infusion chamber.

A second advantage is that it is possible to guarantee the duration of the bayonet fixing, comprising the spiral guides 13 and the pins 12.

A third advantage is the fact that the inevitable wear on the bayonet fixing can be rapidly and economically repaired by replacing the pins 12.

Said advantages are easily attained by adopting the methods in the present document, while preserving all the advantages of the previously described known technique.

This description mentions ground coffee to be placed in the infusion chamber, but it is obvious that the charger described in the present document can be advantageously used with coffee wafers or coffee grounds packaged in rigid plastic cartridges, just as more generally, the method can be used for infusion machines for any type of beverage.

The enclosed drawings show a charger 1 suitable for receiving either coffee or another substance for infusion, either in the form of a loose powder or in a wafer while, if one of the plastic cartridges available on the market is to be used, the shape of the infusion chamber 8 can be changed to create a suitable fitting. It is then evident that, without the need for detailed descriptions or illustrative drawings, it is possible to design a charger 1 which, with suitable interchangeable, internal adaptors, can be used either for coffee or for other powdered substances, wafers or rigid cartridges.

Finally, it should be noted that the heat accumulator/exchanger 3.a for producing steam is foreseen in the enclosed drawings, above and close to the heat accumulator/exchanger 3 while, as far as is known, the known technique always positions these elements side-by-side. It is evident that the position proposed here, by reducing the exposed surfaces, reduces the dispersion of heat due to convective circulation.

## Claims

1. Machine for obtaining infusions of coffee or substances which can be treated in a similar manner, equipped with a charger (1) which can be fitted to the machine by means of suitable fittings and also equipped with an elastically deformable element (5)
- positioned between the compression element (4) and the base (6) of the charger (1);
- designed to move in order to increase the volume of the infusion chamber (8) during the injection of pressurised hot water;
- and designed to return to the previous position after the pressurised hot water has been injected, so as to compress the above-mentioned substance subjected to infusion, if loaded in the form of a loose powder or a wafer, into a semisolid block,
- and provided with filters (9, 10) which press against the substance from which the infusion is to be obtained,
**characterised by** the fact that
said elastically deformable element (5), once released from the charger (1), on conclusion of the process of infusion, can further extend sufficiently to cause the release of the block which has formed in the infusion chamber (8).

2. Machine for obtaining infusions as at the previous claim,
**characterised by** the fact that
the upper portion (6.a) of the part of the internal surface of the base (6) that delimits the infusion chamber (8) can enlarge cone-shaped from the bottom to the top.

3. Machine for obtaining infusions as at any of the previous claims,
**characterised by** the fact that
the charger (1) is fixed to the machine for obtaining infusions in correspondence with the metal support sheath (2) which is in turn in contact with the heat accumulator/exchanger (3) said thermal contact being sufficient to maintain the infusion chamber (8) at a temperature substantially similar to that required for the infusion process.

4. Machine for obtaining infusions as at any of the previous claims,
**characterised by** the fact that
the charger (1) fits into said metal support sheath (2).

5. Machine for obtaining infusions as at any of the previous claims,
**characterised by** the fact that
the charger (1) is of the type equipped with a handle (1.a) and which fits onto the machine by means of a bayonet fitting comprising spiral guides (13) and pins (12), said spiral guides (13) being cut into the entire thickness of said metal support sheath (2) and said pins (12) being fixed to the body of said charger (1).

6. Machine for obtaining infusions as at any of the previous claims,
**characterised by** the fact that
said pins (12) are fitted in such a way as to be easily removable and replaceable.

7. Machine for obtaining infusions as at any of the previous claims,
**characterised by** the fact that
said pins (12) are made of a softer material than the metal support sheath in which the spiral guides (13) are cut.

8. Machine for obtaining infusions as claims 6 or 7,
**characterised by** the fact thatsaid pins (12) would be available as spare parts in various
diameters, in order to recover the backlash caused by progressive wear on the edges of the spiral guides (13) on the bayonet attachment.

9. Machine for obtaining infusions as at any of the previous claims,
**characterised by** the fact that
the heat accumulator/exchanger (3.a) for production of steam is fitted above and close to the heat accumulator/exchanger (3).

## Patentansprüche

1. Maschine für die Herstellung von Kaffee oder anderen, gleichermaßen herstellbaren Infusionsgetränken, ausgerüstet mit einer Ladevorrichtung (1), die an die Maschine mit Hilfe dafür vorgesehenen Verankerungen angeschlossen wird; die Maschine verfügt des Weiteren über ein elastisch verformbares Element (5),
- das zwischen dem Komprimierungselement (4) und dem Boden (6) der Ladevorrichtung (1) angeordnet ist,
- und sich bewegt, um das Volumen innerhalb der Infusionskammer (8) während der Druckeinspritzung des heißen Brühwassers zu erhöhen;
- das Element kehrt nach Abschluss der Wassereinspritzung in seine ursprüngliche Ausgangsposition zurück und presst auf diese Weise das verwendete Pulver zu einem semifesten Plättchen zusammen, und zwar sowohl wenn genanntes Pulver lose eingefüllt, als auch wenn eine Pulverpastille verwendet wurde;
- das Element verfügt über Filter (9, 10), die das Pulver, aus dem das Getränk erhalten wird, zusammendrückt;
Das ganze zeichnet sich dadurch aus, dass
das genannte elastisch verformbare Element (5), wenn es die Ladevorrichtung (1) gelöst hat am Ende des Infusionsvorgangs sich noch weiter ausdehnen kann und zwar soweit, dass das Ablösen der soeben in der Infusionskammer (8) geformten Pastille hervorgerufen wird.

2. Maschine für die Herstellung von Aufbrühgetränken, wie aus dem vorherigen Patentanspruch ersichtlich,
die sich durch die Tatsache auszeichnet, dass
der obere Bereich (6.a) der internen Oberfläche des Bodens (6) der die Infusionskammer (8) abgrenzt, sich kegelförmig ausdehnen kann, und zwar von unten nach oben.

3. Maschine für die Herstellung von Aufbrühgetränken, wie aus dem vorherigen Patentanspruch ersichtlich,
die sich durch die Tatsache auszeichnet, dass
die Ladevorrichtung (1) an der Maschine zur Herstellung von Aufbrühgetränken in der Nähe der metallenen Ummantelung (2) positioniert wird und ihrerseits in wärmetechnischem Kontakt mit dem Akkumulator-Wärmeaustauscher (3) steht, da der genannte wärmetechnische Kontakt ausreichend ist, um die Infusionskammer (8) auf einer Temperatur zu halten, die im Wesentlichen der Temperatur entspricht, die für den Infusionsvorgang erforderlich ist.

4. Maschine für die Herstellung von Aufbrühgetränken, wie aus dem vorherigen Patentanspruch ersichtlich,
die sich durch die Tatsache auszeichnet, dass
die Ladevorrichtung (1) ihren Sitz innerhalb der metallenen Ummantelung (2) hat.

5. Maschine für die Herstellung von Aufbrühgetränken, wie aus dem vorherigen Patentanspruch ersichtlich,
die sich durch die Tatsache auszeichnet, dass
die Ladevorrichtung (1) mit einem Hebel (1.a) ausgestattet ist, der an der Maschine mit Hilfe von Renkverriegelungen, bestehend aus Spiralführungen (13) und Führungsstiften (12) befestigt ist; die genannten Spiralführungen (13) sind aus der gesamten Stärke des Ummantelungsmaterials (2) gearbeitet und die Führungsstifte (12) sind am Korpus der Ladevorrichtung(1) selbst befestigt.

6. Maschine für die Herstellung von Aufbrühgetränken, wie aus dem vorherigen Patentanspruch ersichtlich,
die sich durch die Tatsache auszeichnet, dass
die genannten Führungsstifte (12) so befestigt sind, dass sie problemlos abmontiert und ersetzt werden können.

7. Maschine für die Herstellung von Aufbrühgetränken, wie aus dem vorherigen Patentanspruch ersichtlich,
die sich durch die Tatsache auszeichnet, dass
die genannten Führungsstifte (12) aus weicherem Material hergestellt sind, als das Material, das für die Ummantelung (2) verwendet wurde und in das die Spiralführungen (13) gearbeitet wurden.

8. Maschine für die Herstellung von Aufbrühgetränken, wie aus den vorherigen Patentansprüchen 6 und 7 ersichtlich,
die sich durch die Tatsache auszeichnet, dass
die genannten Führungsstifte (12) als Ersatzteile und mit unterschiedlichen Durchmessern erhältlich sind, so dass der Spielraum eliminiert werden kann, der sich mit der Zeit auf Grund eines progressiven Verschleißes der Ränder der Spiralführungen (13) in der Renkverriegelung bilden kann.

9. Maschine für die Herstellung von Aufbrühgetränken, wie aus dem vorherigen Patentanspruch ersichtlich,
die sich durch die Tatsache auszeichnet, dass
der Akkumulator-Wärmeaustauscher (3.a), der für die Herstellung von Dampf sorgt über oder aber in engster Nähe zum Akkumulator-Wärmeaustauscher (3) positioniert ist.

## Revendications

1. Machine à obtenir des infusions de café ou d'autres substances similairement traitables, équipée d'un chargeur (1) à enclencher à la machine par des raccords prévus à cet effet et munie d'un élément élastiquement déformable (5)
- positionné entre l'élément de compression (4) et la base (6) du chargeur (1),
- destiné à se déplacer pour augmenter le volume de la chambre d'extraction (8) pendant l'injection sous pression de l'eau chaude de percolation,
- et destiné à revenir dans la position précédente à la fin de l'injection de l'eau de percolation de manière à presser, jusqu'à la réduire en pastille semi-solide, la substance soumise à la percolation, après avoir été chargée sous forme incohérente ou contenue dans une dosette,
- est équipé de filtres (9, 10) qui pressent contre la substance à partir de laquelle on obtient la percolation,
**caractérisée par le fait que**
une fois que le chargeur est décroché(1) au terme du processus de percolation, l'élément élastiquement déformable (5) peut se détendre ultérieurement d'une quantité suffisante pour provoquer le décrochement de la pastille à peine formée par la chambre d'extraction (8).

2. Machine à obtenir des infusions comme la revendication précédente,
**caractérisée par le fait que**
la portion supérieure (6.a) de la partie de la surface intérieure de la base (6) qui délimite la chambre d'extraction (8) peut s'élargir en forme de cône du bas vers le haut.

3. Machine à obtenir des infusions comme dans toute revendication précédente,
**caractérisée par le fait que**
le chargeur (1) se fixe à la machine à obtenir des infusions en correspondance d'une chemise métallique de soutien (2) qui est à son tour en contact thermique avec l'accumulateur-échangeur de chaleur (3), ce contact thermique étant suffisant pour garder la chambre d'extraction (8) à une température égale à celle qui est requise pour le processus de percolation.

4. Machine à obtenir des infusions comme dans la revendication précédente,
**caractérisée par le fait que**
le chargeur (1) est logé dans la chemise métallique de soutien (2).

5. Machine à obtenir des infusions comme dans la revendication précédente,
**caractérisée par le fait que**
le chargeur (1) est de type muni d'une poignée (1.a) à enclencher à la machine par des moyens d'enclenchement à baïonnette constitués de guides à spirale (13) et de broches (12), lesdits guides à spirale (13) étant situés dans toute l'épaisseur de la chemise métallique de soutien (2) et les broches (12) fixées au corps du chargeur (1).

6. Machine à obtenir des infusions comme dans la revendication précédente,
**caractérisée par le fait que**
lesdites broches (12) sont fixées de manière à être facilement démontables et remplaçables.

7. Machine à obtenir des infusions comme dans la revendication précédente,
**caractérisée par le fait que**
lesdites broches (12) sont réalisées dans un matériau plus tendre que celui qui constitue la partie de la chemise métallique de soutien (2) où sont situés les guides à spirale (13).

8. Machine à obtenir des infusions comme dans les revendications 6 ou 7 précédentes,
**caractérisée par le fait que**
lesdites broches (12) sont rendues disponibles pour des pièces de rechange dans des diamètres divers visant à récupérer le jeu qui peut se former avec le temps dans l'enclenchement à baïonnette suite à une usure progressive des bords des guides à spirale (13).

9. Machine à obtenir des infusions comme dans l'une des précédentes revendications,
**caractérisée par le fait que**
l'accumulateur-échangeur de chaleur (3.a) préposé à la production de vapeur est monté au-dessus et à étroite proximité de l'accumulateur-échangeur de chaleur (3).
